**Europäisches Patentamt**

(19) **European Patent Office**

**Office européen des brevets**

(11) Publication number : **0 414 331 B1**

(12) **EUROPEAN PATENT SPECIFICATION**

(45) Date of publication of patent specification :
02.12.92 Bulletin 92/49

(51) Int. Cl.⁵ : **F24F 11/053,** G05D 23/185, F16K 31/08

(21) Application number : **90202695.4**

(22) Date of filing : **02.01.87**

(54) Changeover arrangement for a central air conditioning unit.

(30) Priority : **06.01.86 US 816187**

(43) Date of publication of application :
**27.02.91 Bulletin 91/09**

(45) Publication of the grant of the patent :
**02.12.92 Bulletin 92/49**

(84) Designated Contracting States :
**CH FR GB LI SE**

(56) References cited :
**EP-A- 0 043 002**
**DE-C- 1 229 927**
**FR-A- 2 550 602**
**GB-A- 813 260**
**US-A- 2 575 086**
**US-A- 3 117 723**
**US-A- 3 450 342**
**US-A- 3 824 800**
**US-A- 4 073 433**
**PATENT ABSTRACTS OF JAPAN, vol. 8, no.
230 (M-333)(1667), October 23, 1984 & JP-A-59
110 981**

(60) Publication number of the earlier application in
accordance with Art. 76 EPC : **0 229 742**

(73) Proprietor : **CARRIER CORPORATION
Carrier Tower 6304 Carrier Parkway P.O. Box
4800
Syracuse New York 13221 (US)**

(72) Inventor : **Dreibelbis, Richard C.
55 Sanford Road
Fair Lawn, New Jersey 07410 (US)**
Inventor : **Coleman, Milton H.
122 West Dauenhauer Street
East Syracuse, New York 13057 (US)**

(74) Representative : **Weydert, Robert et al
OFFICE DENNEMEYER S.à.r.l. P.O. Box 1502
L-1015 Luxembourg (LU)**

Jouve, 18, rue Saint-Denis, 75001 PARIS

## Description

This invention relates to a central air conditioning unit. In central air conditioning units it is often necessary and/or desirable to change over from heating to cooling and vice versa. Such changeovers can be long-term, as in the case of seasonal changes or short-term, as in the case of warming up an overcooled building prior to the arrival of the work force. For example, after a weekend or holiday during which the minimum cooling condition overcooled the building in the absence of the cooling load supplied by the personnel, lights and equipment, it is desirable to warm the building long enough to reduce the overcooling to an acceptable level. In systems as disclosed in EP-A-0 043 002 having a single thermostatic bleed valve the thermostatic response is, however, correct without change for only one mode of operation. If, for example, the thermostatic response is correct for cooling, the supplying of heated air will encounter a minimum or no flow condition in an undercooled zone or area and dissatisfaction causing overheating if the zone temperature is above the cooling set point. Obviously, neither condition is satisfactory or energy efficient.

The disadvantage is avoided by the central air conditioning unit of US-A-3 450 342 (which discloses an air conditioning unit according to the precharacterizing portion of claim 1). The known unit comprises separate bleed type thermostatic means for controlling the flow in the heating mode and in the cooling mode. Changeover is effected by a bimetal disk in the changeover valve connected between the conditioned air pressure regulator and the cooling and heating bleed type thermostatic means.

A magnetically operated valve is disclosed in GB-A-813 260, which comprises housing means defining a chamber and having a plurality of fluid port means in fluid communication with said chamber, valve element means including magnetic means and being pivotably mounted in said chamber so as to be movable between a first position blocking one of said port means and a second position blocking another of said port means and actuator means including a magnetic member and means for moving said magnetic member relative to said magnetic means whereby said valve element means is caused to move between said first and second positions due to magnetic force between said magnetic means and said magnetic member.

The object of the invention is to provide the airconditioning unit of the recited type with an improved changeover function between a controlled heating mode and a controlled cooling mode.

In accordance with the invention, to achieve this, there is provided a central air conditioning unit comprising means for supplying conditioned air, means for controlling the flow of said conditioned air into an area, first bleed-type thermostatic means for regulating said means for controlling the flow so as to maintain a preset temperature when cool conditioned air is being supplied, second bleed-type thermostatic means for regulating said means for controlling the flow so as to maintain a preset temperature when warm conditioned air is being supplied, and means for connecting said means for controlling the flow to said first thermostatic means when cool conditioned air is being supplied and to said second thermostatic means when warm conditioned air is being supplied, said means for connecting including a valve comprising housing means defining a chamber and having an inlet fluidly connected to said means for controlling and a first and second outlet respectively connected to said first and second thermostatic means and in fluid communication with said chamber, and valve element means movable between a first position blocking one of said outlets and a second position blocking the other of said outlets, characterized in that said valve element means include ferro-magnetic means pivotably mounted in said chamber, and that there is further provided biasing means for normally positioning said valve element means in said first position and actuator means including a magnetic member and means for moving said magnetic member into and out of proximity with said ferro-magnetic means whereby said valve element means is caused to move to said second position due to magnetic attraction between said ferro-magnetic means and said magnetic member when in proximity to cause said one outlet and the associated one of said thermostatic means to be fluidly connected to said means for controlling and returns to said first position to cause said other outlet and the associated one of said thermostatic means to be fluidly connected to said means for controlling when out of proximity.

The changeover valve which may also be referred to as a proximity switch can be either thermostatically responsive or solenoid actuated.

Thus, there is provided a changeover of control air pressure to either side of a two port, heating/cooling duct powered thermostat in response to a change in the duct temperature in one embodiment and in response to an electrical signal in a second embodiment.

For a fuller understanding of the central air conditioning unit reference should now be made to the following detailed description thereof taken in conjunction with the accompanying drawings, wherein:

Figure 1 is a schematic representation of a central air conditioning system employing the present invention for a heating/cooling changeover;

Figure 2 is a pictoral view of a first embodiment of the changeover valve and actuator;

Figure 3 is a sectional view taken along line 3-3 of Figure 2 showing the valve element in a first, actuated position;

Figure 4 is a sectional view of a second embodiment of the changeover valve and actuator corresponding to Figure 3 and showing the valve element in a second, unactuated position;

Figure 5 is a sectional view of a third embodiment of the changeover valve and actuator showing the valve element in the second position but which is the solenoid actuated position;

Figure 6 is a pictorial view of the valve element;

Figure 7 is a top view of the valve element; and

Figure 8 is a sectional view taken along line 8-8 of Figure 7.

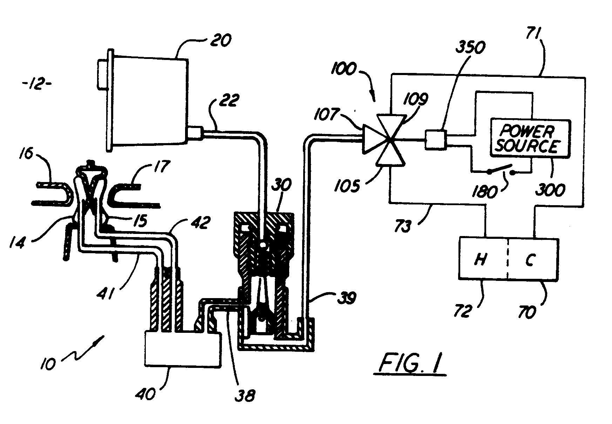

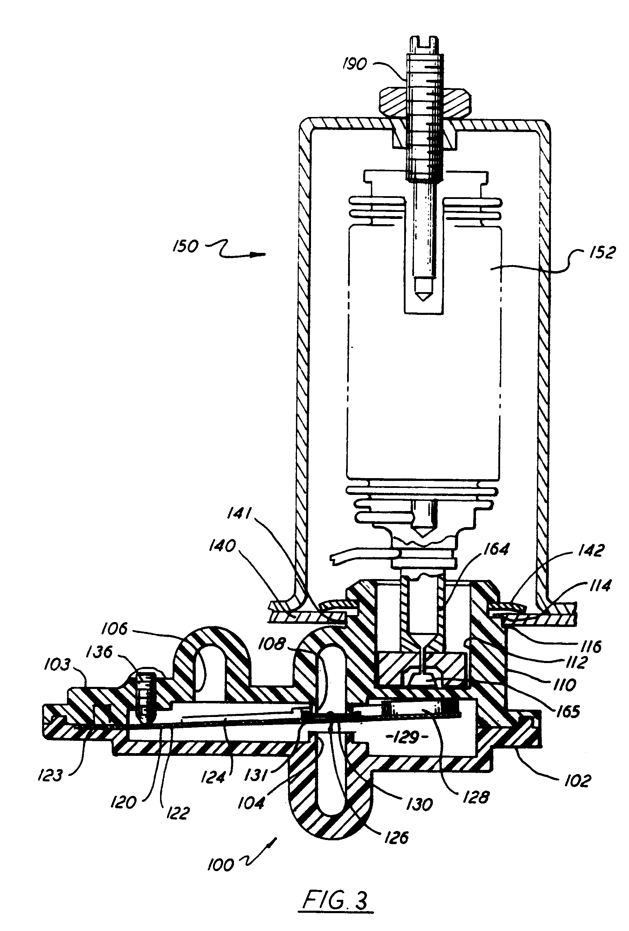

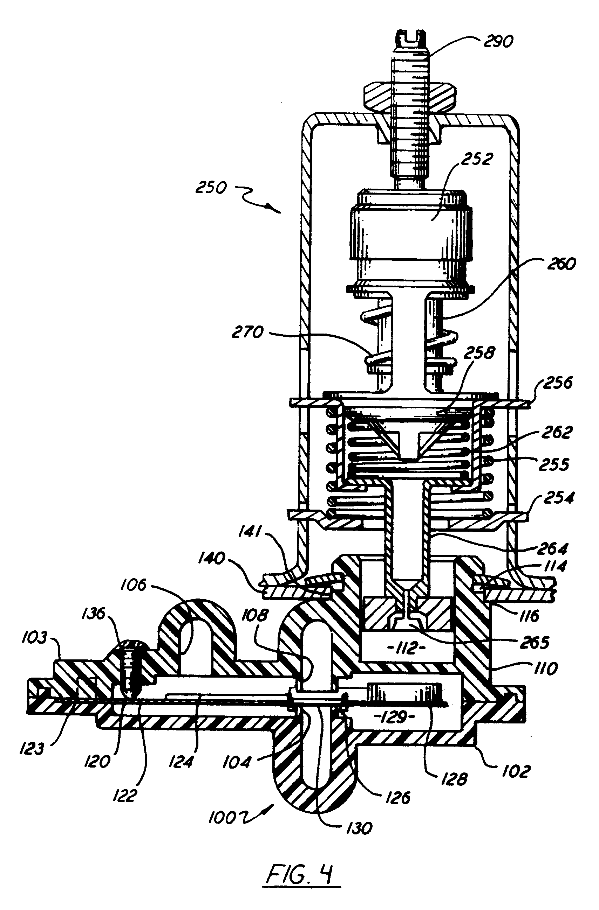

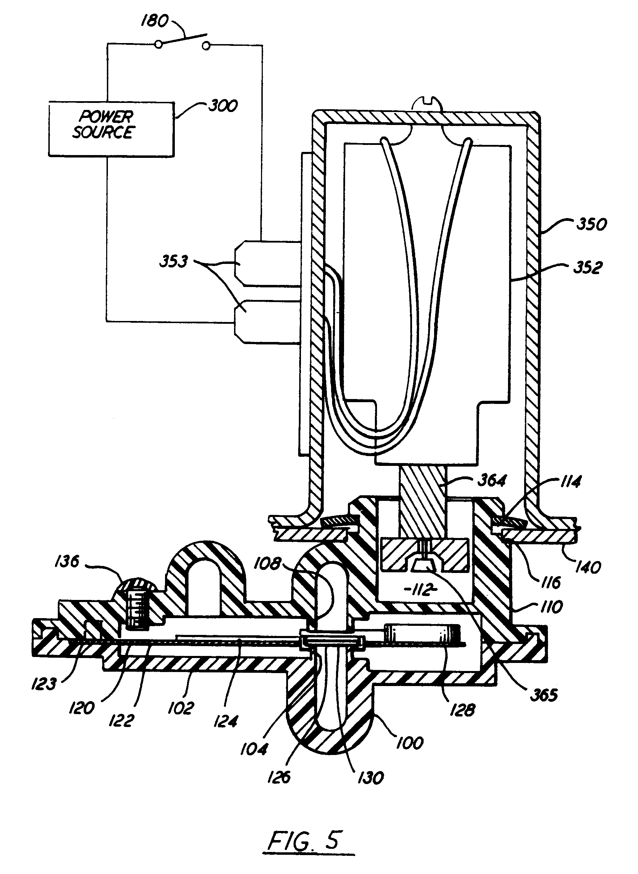

In Figure 1 a central air conditioning system having a heating/cooling changeover is shown. The system is suitable for use with either actuator 150 of Fig. 3, 250 of Fig. 4 or 350 of Fig. 5, which will be described in more detail hereinafter. The numeral 10 generally designates an air distribution unit in which conditioned air is delivered from a central source thereof (not illustrated) to a plenum chamber 12 of the air distribution unit. A damper arrangement illustrated as inflatable bellows 14 and 15 regulates the flow of conditioned air from the plenum 12 to the area or space being conditioned. A portion of the conditioned air furnished to plenum chamber 12 flows through filter 20 where any foreign bodies entrained therein will be removed. The conditioned air passing through filter 20 is used for controlling the operation of unit 10. The control air passes from filter 20 to pressure regulator 30 via line 22. The control air passes from regulator 30 into distributor 40 via line 38 and from distributor 40 via lines 41 and 42 to bellows 14 and 15, respectively. Additionally, control air passes via line 39 to common or inlet port 107 of valve assembly 100. Valve assembly has a normally open outlet 109 connected to cooling thermostat 70 via line 71 and normally closed outlet 105 connected to heating thermostat 72 via line 73. Thermostats 70 and 72 are oppositely acting bleed thermostats such as is illustrated in EP-A-0 043 002. They are oppositely acting in that cooling thermostat 70 controls the lowering of the room temperature to the set point whereas the heating thermostat 72 controls the raising of the room temperature to the set point.

The actuator 350, as illustrated, may have a switch 180 which may be of a thermostatic type and exposed to the plenum air or flowing air stream, or it may be a switch controlled by a computer or the like. The actuated and unactuated position of actuator 350 are the reverse of those of actuators 150 and 250. In the actuated position of actuator 350, control air passes via line 39 to port 107, through valve assembly 100, out port 109 and passes via line 71 to cooling thermostat 70 which controls the inflation of bellows 14 and 15 as described above. If actuator 350 is unactuated, control air will pass via line 39 to port 107, through valve assembly 100, out port 105 and will pass via line 73 to heating thermostat 72 which controls the inflation of bellows 14 and 15 as described above. Actuator 150 or 250 would similarly respond to the plenum air or flowing air stream so as to connect ports 107 and 109 in response to cool air and ports 107 and 105 in response to hot air but the designation of the actuated and unacutated positions would be reversed. If desired, the ports 109 and 105 could be connected to thermostats 72 and 70, respectively, if the heating mode was desired tobe the actuated mode of actuator 350 or the unactuated mode of actuator 150 or 250. Where switch 180 is computer controlled, in addition to providing a changeover between heating and cooling, ventilation can be minimized in the case of a fire by causing the system to go over to the heating mode which would reduce the supplying of fresh air to the fire.

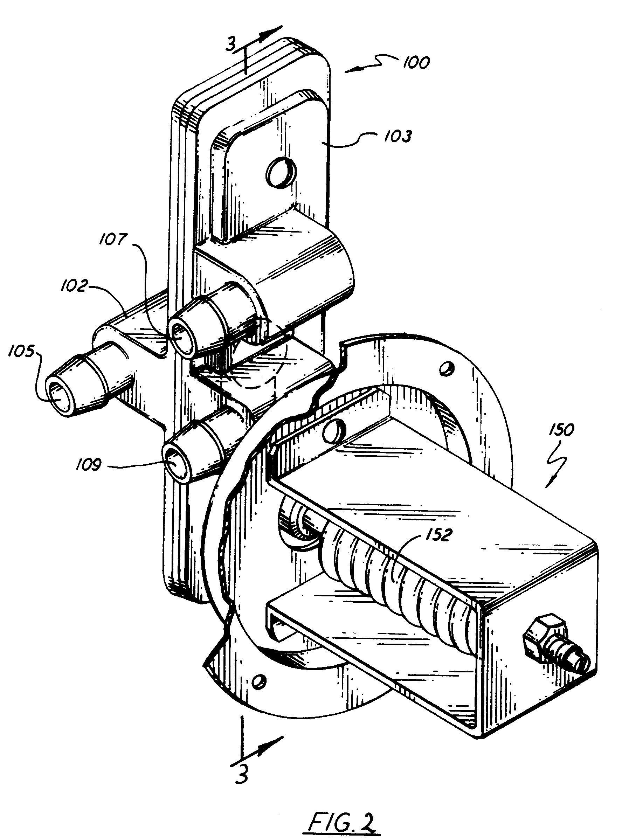

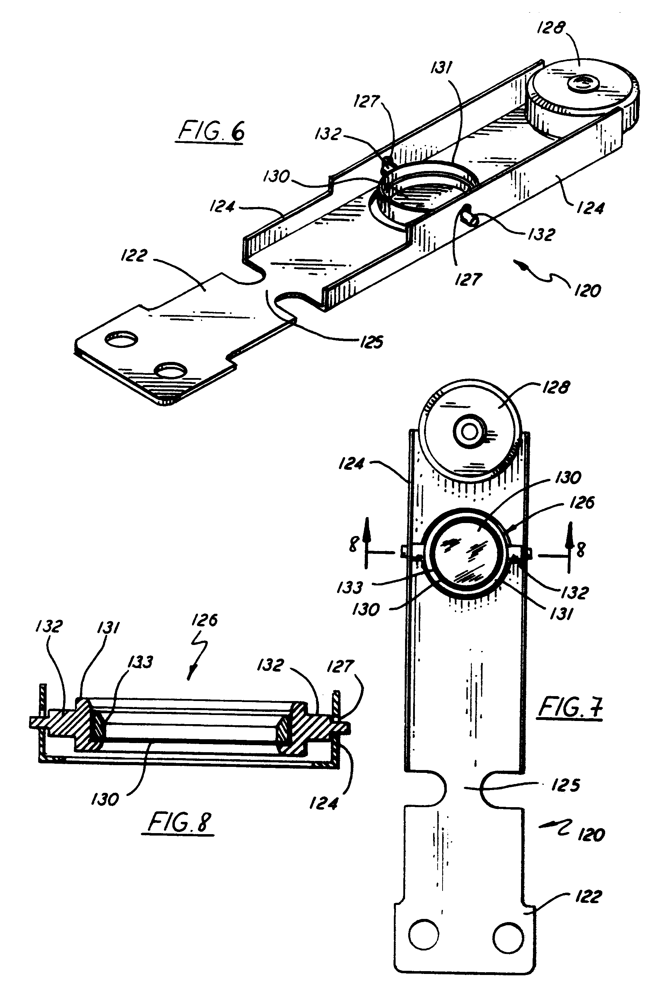

In Figures 2 and 3, the numeral 100 generally designates the valve assembly or proximity switch and the numeral 150 generally designates the actuator. The valve assembly 100 includes mating casing parts 102 and 103 which are of a non-magnetic material, such as plastic, and are glued or otherwise suitably secured together in a fluid tight assembly. Casing part 102 defines a normally closed port 104 which is fluidly connected to outlet 105. Casing part 103 defines port 106 and normally open port 108 which are, respectively, fluidly connected to inlet 107 and outlet 109. Casing part 103 further defines an extension 110 which has a cylindrical chamber 112 formed therein as well as an annular groove 114 and shoulder 116 formed on the exterior of the extension 110. A valve element 120 includes a flexible or pivotable blade 122 having one end received in a complementary recess 123 formed in casing part 102 so as to permit the locating and securing of valve element 120 in the assembling of casing parts 102 and 103. Blade 122 has a stiffener in the form of a stepped turned up flange 124 as well as yoke assembly 126 and low reluctance ferro magnetic pad 128 secured thereto. As is best shown in Figures 6 and 7, blade 122 also has a necked down portion 125 which defines the point of flexure of blade 122. Yoke assembly 126 includes a polyurethane film disc 130 which alternatively seats on port 104 or port 108 in a valving action. Because the yoke assembly 126 moves through an arc in moving between the positions blocking either port 104 or port 108, it is necessary to have the film disc 130 become co-planar with the seating face of ports 104 and 108. To achieve this, yoke 131 is provided with stepped diametrically extending pivot rods 132 as is best shown in Figures 7 and 8. Stepped pivot rods 132 are rotatably or pivotably received in mounting holes 127 in stepped turned up flange 124. Film disc 130 is held in place in yoke 131 by ring 133 which is press fit into yoke 131 with film disc 130 therebetween. Yoke 131 is therefore able to pivot into a co-planar engagement with port 104 or 108 and is moved to the co-planar engagement due to the unbalanced torsional force on the yoke 131 when film disc 130 is not co-planar and engages only one side thereof when engaging port 104 or 108. In installing yoke assembly 126, one or both of the stepped turned up flanges 124 is bent towards flat a sufficient amount to permit yoke assembly 126 to be snapped into mounting holes 127 and the flange (s) returned to their original shape. Screw 136 is threadably secured in casing part 103 and engages blade 122 so as to provide a seating bias to cause film disc 130 to close port 104 as illustrated in Figure 4 in an unactuated position of actuator 150 or 250. The necked down portion 125 of blade 122, as is best shown in Figures 6 and 7, defines the pivot for flexure of blade 122 since it provides the least resistance to flexure.

As best shown in Figure 3, the valve assembly or proximity switch 100 is secured in place by inserting extension 110 into hole 141 in sheet metal member 140 such that shoulder 116 engages sheet metal member 140. Typically, sheet metal member 140 is a member which may be installed in the wall of a plenum. A C-clip 142 or other suitable attachment means is placed in groove 114 and engages the opposite side of sheet metal member 140 as that engaged by shoulder 116.

With valve assembly 100 secured in place in member 140, an actuator can then be attached to member 140. Referring to Figure 3, actuator 150 includes a charged thermostatic bellows 152 which is preferably of copper and filled with gas. Magnetic actuator 164 is secured to bellows 152 and carries a magnetic member 165 which is reciprocated in chamber 112 by the expansion and contraction of bellows 152 due to changes in the temperature of the warm or cool air stream to which it is exposed. Magnetic member 165 acts as a proximity switch with respect to magnetic pad 128 in that magnetic member 165 is not exposed to the fluid within the chamber 129 but causes the movement of film disc 130 in a valving action by attraction magnetic pad 128 when in proximity thereto. In Figures 3 and 4 the structure of the valve assembly or proximity switch 100 is identical but Figure 3 illustrates the position of valve element 120 due to the magnetic attraction between magnetic member 165 and magnetic pad 128 whereas Figure 4 illustrates the unactuated position of valve element 120 due solely to the biasing effect of screw 136. The position of bellows 152 and therefore magnetic member 165 can be adjusted by srew 190.

In Figure 4, the valve assembly 100 is the same as that illustrated in Figures 2 and 3, but actuator 150 has been replaced with a different thermal actuator 250. The thermal actuator 250 is specifically illustrated as a phase change element 252 where a solid phase material goes to a liquid phase in the temperature range of interest and with an increase in volume, but could be a bimetal. In the unactuated position illustrated, compression spring 255 seats against stop 254 and cap member 256. Cap member 256 provides a seat for the head 258 of plunger 260 and is biased in opposition to spring 255 by spring 262 which seats against magnetic actuator 264 and head 258. Magnetic actuator 264 carries a magnetic member 265 which is reciprocated in chamber 112 by the actuator 250. The spring 262 serves as a lost motion device in that it absorbs overtravel of head 258 after magnetic actuator 264 has bottomed out in its movement within chamber 112. Spring 270 serves to return plunger 260 to the illustrated position when the output force is reduced in thermal element 252. The thermal element 252, located in the warm or cool air stream, senses the flowing air temperature and acts by changing phase, when appropriate. The position of thermal element 252 and therefore magnetic member 265 can be adjusted by screw 290.

Referring now to Figure 5, the valve assembly or proximity switch 100 is the same as that of Figures 2-4 but actuator 350 includes an internal spring solenoid 352 for positioning valve element 120 in response to an electric signal. The magnetic actuator 364 which carries magnetic member 365 is attached to the shaft of the solenoid. Upon energizing of the solenoid 352, magnetic member 365 is moved outwardly in chamber 112 causing outlet port 104 to close, as illustrated. When the power is removed from the solenoid 352 the internal spring (not illustrated) causes the magnetic actuator 364 to move magnetic member 365 further into chamber 112 to thereby attract magnetic pad 128 causing valve disc 130 to engage and close port 108 and to open port 104. Power to solenoid 352 through contacts 353 is provided upon the closing of switch 180 which can be a thermostatically responsive switch or a computer controlled switch. The power source 300 can be any suitable source of power and may be incorporated into a computer control.

As noted, the valve assembly 100 is identical in Figures 2-5 Figures 4 and 5 show valve element 120 in the same position closing port 104. However, Figure 4, is a cold or an unactuated position of actuator 250 and Figure 5 is an actuated position of actuator 350. The difference in designation is due to the fact that energy in the form of heat is necessary to expand/actuate the actuators 150 and 250 whereas electrical energy is necessary to contact/actuate actuator 350. Figure 3 shows the valve element 120 in its actuated position closing port 108. In the case of actuator 350, the solenoid 352 is actuated in response to the completing of an electric circuit by the closing of a switch 180 which may be caused by a computer or the like or may be a thermally actuated switch exposed to the conditioned air which completes the power supply circuit upon closing. Actuators 150 an 250, however, are responsive to the temperature of their surroundings and would normally be exposed to the plenum air or the moving air stream.

**Claims**

1. Central air conditioning unit comprising means for supplying conditioned air, means (30) for controlling the flow of said conditioned air into an area, first bleed-type thermostatic means (70) for regulating said means (30) for controlling the flow so as to maintain a preset temperature when cool conditioned air is being supplied, second bleed-type thermostatic means (72) for regulating said means (30) for controlling the flow so as to maintain a preset temperature when warm conditioned air is being supplied, and means for connecting said means (30) for controlling the flow to said first thermostatic means (70) when cool conditioned air is being supplied and to said second thermostatic means (72) when warm conditioned air is being supplied, said means for connecting including a valve (100) comprising housing means defining a chamber (129) and having an inlet (106, 107) fluidly connected to said means for controlling (30) and a first (108, 109) and second (104, 105) outlet respectively connected to said first and second thermostatic means (70, 72) and in fluid communication with said chamber (129), and valve element means (120) movable between a first position blocking one of said outlets (104, 105, 108, 109) and a second position blocking the other of said outlets, characterized in that said valve element means (120) include ferro-magnetic means (128) pivotably mounted in said chamber (129), and that there is further provided biasing means (136) for normally positioning said valve element means (120) in said first position, and actuator means (150; 250; 350) including a magnetic member (165; 265, 365) and means for moving said magnetic member into and out of proximity with said ferro-magnetic means (128) whereby said valve element means (120) is caused to move to said second position due to magnetic attraction between said ferro-magnetic means (128) and said magnetic member (165, 265, 365) when in proximity to cause said one outlet (104, 105) and the associated one (72) of said thermostatic means to be fluidly connected to said means for controlling (30) and returns to said first position to cause said other outlet (108, 109) and the associated one of said thermostatic means (70) to be fluidly connected to said means for controlling (30) when out of proximity.

2. Air conditioning unit according to claim 1, characterized in that said means for moving includes thermostatically responsive means (152; 252; 180).

3. Air conditioning unit according to claim 1, characterized in that said means for moving includes a solenoid (352).

4. Air conditioning unit according to claim 3, characterized in that said means for moving includes a thermostatically responsive switch (180).

5. Air conditioning unit according to claim 1, characterized in that said valve element means (120) further includes means (125) for locating a flexure point of said valve element means (120).

6. Air conditioning unit according to claim 1, characterized in that said valve element means (120) further includes a valve blade (122) with a valve disc (126) pivotably mounted thereon so as to be co-planar with said first and second outlets (104, 105; 108, 109) when seated thereon.

**Patentansprüche**

1. Zentrale Klimaeinheit mit einer Einrichtung zur Zufuhr von klimatisierter Luft, einer Einrichtung (30) zum Steuern der Strömung der klimatisierten Luft in einen Bereich, einer ersten Abzapf-Thermostateinrichtung (70) zum Regulieren der Einrichtung (30) zum Steuern der Strömung, so daß eine voreingestellte Temperatur aufrechterhalten wird, wenn kalte klimatisierte Luft zugeführt wird, einer zweiten Abzapf-Thermostateinrichtung (72) zum Regulieren der Einrichtung (30) zum Steuern der Strömung, so daß eine voreingestellte Temperatur aufrechterhalten wird, wenn warme klimatisierte Luft zugeführt wird, und einer Einrichtung zum Verbinden der Einrichtung (30) zum Steuern der Strömung zu der ersten Thermostateinrichtung (70), wenn kalte klimatisierte Luft zugeführt wird, und zu der zweiten Thermostateinrichtung (72), wenn warme klimatisierte Luft zugeführt wird, wobei die Einrichtung zum Verbinden ein Ventil (100) aufweist, das eine Gehäuseeinrichtung hat, die eine Kammer (129) enthält, und einen Einlaß (106, 107) in Fluidverbindung mit der Einrichtung (30) zum Steuern eines ersten (108, 109) bzw. zweiten (104, 105) Auslasses, die mit der ersten bzw. zweiten Thermostateinrichtung (70, 72) verbunden sind und in Fluidverbindung mit der Kammer (129) stehen, und eine Verschlußstückeinrichtung (120), die zwischen einer ersten Position, in der sie einen der Auslässe (104, 105, 108, 109) blockiert, und einer zweiten Position, in der sie den anderen der Auslässe blockiert, bewegbar ist, dadurch gekennzeichnet, daß die Verschlußstückeinrichtung (120) eine ferromagnetische Einrichtung (128) aufweist, die in der Kammer (129) schwenkbar befestigt ist, und daß weiter eine Vorspanneinrichtung (136) vorgesehen ist, um die Verschlußstückeinrichtung (120) normalerweise in der ersten Position zu positionieren, und eine Stellantriebseinrichtung (150; 250; 350) mit einem magnetischen Teil (165; 265; 365) und einer Einrichtung zum Bewegen des magnetischen Teils in die und aus der Nähe der ferromagnetischen Einrichtung (128), wodurch die Verschlußstückeinrichtung (120) veranlaßt wird, sich aufgrund von magnetischer Anziehung zwischen der ferromagnetischen Einrichtung (128) und dem magnetischen Teil (165, 265, 365), wenn es in der Nähe ist, in die zweite Position zu bewegen, um den einen Auslaß (104, 105) und die zugeordnete (72) Thermostateinrichtung in Fluidverbindung mit der Einrichtung (30) zum Steuern zu bringen, und in die erste Position zurückzukehren, um den anderen Auslaß (108, 109) und die zugeordnete Thermostateinrichtung (70) in Fluidverbindung mit der Einrichtung (30) zum Steuern zu bringen, wenn es nicht in der Nähe ist.

2. Klimaeinheit nach Anspruch 1, dadurch gekennzeichnet, daß die Einrichtung zum Bewegen eine thermostatisch ansprechende Einrichtung (150; 252; 180) aufweist.

3. Klimaeinheit nach Anspruch 1, dadurch gekennzeichnet, daß die Einrichtung zum Bewegen eine Magnetspule (352) aufweist.

4. Klimaeinheit nach Anspruch 3, dadurch gekennzeichnet, daß die Einrichtung zum Bewegen einen thermostatisch empfindlichen Schalter (180) aufweist.

5. Klimaeinheit nach Anspruch 1, dadurch gekennzeichnet, daß die Verschlußstückeinrichtung (120) weiter eine Einrichtung (125) aufweist zum Festlegen eines Biegepunktes der Verschlußstückeinrichtung (120).

6. Klimaeinheit nach Anspruch 1, dadurch gekennzeichnet, daß die Verschlußstückeinrichtung (120) weiter ein Ventilblatt (122) mit einer Ventilscheibe (126) aufweist, die schwenkbar darauf befestigt ist, so daß sie mit dem ersten und zweiten Auslaß (104, 105; 108, 109) koplanar ist, wenn sie darauf sitzt.

**Revendications**

1. Système de conditionnement d'air central comprenant des moyens pour fournir de l'air conditionné, un moyen (30) pour commander le flux d'air conditionné vers et dans une zone, un moyen thermostatique (70) du type à soutirage pour régler le moyen (30) de commande du flux d'air de manière à maintenir une température prédéterminée lorsque de l'air conditionné froid est en train d'être fourni, un second moyen thermostatique (72) du type à soutirage pour régler le moyen (30) commandant le flux d'air de manière à maintenir une température prédéterminée lorsque de l'air conditionné chaud est en train d'être fourni, et des moyens pour relier le moyen (30), commandant le flux d'air, au premier moyen thermostatique (70), lorsque de l'air conditionné froid est en train d'être fourni, et au second moyen thermostatique (72) lorsque de l'air conditionné chaud est en train d'être fourni, ces moyens de liaison comportant une vanne (100) comprenant un corps définissant une chambre (129) et ayant un orifice d'entrée (106,107) communiquant avec le moyen de commande (30) et des premier (108,109) et second (104,105) orifices de sortie reliés respectivement aux premier et second moyens thermostatiques (70,72) et en communication avec la chambre (129), et un clapet (120) mobile entre une première position dans laquelle il bloque l'un des orifices de sortie (104,105,108,109) et une seconde position dans laquelle il bloque l'autre des orifices de sortie, caractérisé en ce que le clapet (120) comporte un moyen ferromagnétique (128), monté à pivotement dans la chambre (129) et en ce qu'est en outre prévu un moyen de sollicitation (136) qui assure normalement la mise en place du clapet (120) dans sa première position, et un actionneur (150;250;350) comportant un organe magnétique (165;265;365) et un moyen pour déplacer cet organe magnétique vers une position proche du moyen ferromagnétique (128) et vers une position éloignée de celui-ci, si bien que le clapet (120) est amené à se déplacer vers sa seconde position, par suite de l'attraction magnétique entre le moyen ferromagnétique (128) et l'organe magnétique (165;265;365), lorsque ceux-ci se trouvent à proximité l'un de l'autre, afin d'amener le premier orifice de sortie (104,105) et le moyen thermostatique associé (72) à être mis en communication avec le moyen de commande (30), et à retourner à sa première position, pour amener le second orifice de sortie (108,109) et le moyen thermostatique (70) associé à celui-ci à être mis en communication avec le moyen de commande (30), lorsque le moyen ferromagnétique et l'organe magnétique sont éloignés l'un de l'autre.

2. Système de conditionnement d'air suivant la revendication 1 caractérisée en ce que le moyen pour déplacer l'organe magnétique comporte un moyen répondant d'une manière thermostatique (152;252;180),

3. Système de conditionnement d'air suivant la revendication 1 caractérisée en ce que le moyen pour déplacer l'organe magnétique comporte un solénoïde (352).

4. Système de conditionnement d'air suivant la revendication 1 caractérisée en ce que le moyen pour déplacer l'organe magnétique comporte un interrupteur (180) à réponse thermostatique.

5. Système de conditionnement d'air suivant la revendication 1 caractérisée en ce que le clapet (120) comporte en outre un moyen (125) pour déterminer un point de flexion du clapet (120).

6. Système de conditionnement d'air suivant la revendication 1 caractérisée en ce que le clapet (120) comporte en outre une lame (122) sur laquelle est monté à pivotement un disque de clapet (126), de manière que ce disque soit coplanaire avec les premier et second orifices de sortie (104,105;108,109), lorsqu'il est appliqué sur ces orifices.

FIG. I

FIG. 2

_FIG. 3_

FIG. 4

FIG. 5

FIG.6

FIG.7

FIG.8